# EUROPEAN PATENT SPECIFICATION

(11) **EP 2 812 143 B1**
(45) Date of publication and mention of the grant of the patent: **03.05.2017**
(21) Application number: 13711199.3
(22) Date of filing: 04.03.2013
(51) Int. Cl.: B23D 45/04

(54) **BLADE FOR CUTTING AND/OR GRINDING**
SÄGEBLATT UND/ODER SCHLEIFBLATT
LAME DE DÉCOUPE ET/OU DE MEULAGE

(30) Priority: 06.03.2012 DE 102012004212
(43) Date of publication of application: 17.12.2014
(73) Proprietor: Illinois Tool Works Inc., Glenview, IL 60025 (US)
(72) Inventor: BRAUN, Falco, 40670 Meerbusch (DE)
(74) Representative: Trinks, Ole
(86) International application number: PCT/US2013/028792
(87) International publication number: WO 2013/134084

(56) References cited:
- CA-A1- 2 650 190
- CN-U- 201 799 707
- CN-U- 202 439 071
- DE-U1- 29 919 103

## Description

The invention relates to a blade for cutting and/or grinding in accordance with the preamble of claim 1.

EP 1 103 347 A1 describes a blade or a tool insert for cutting, slitting or grinding, in which a plurality of arrow-shaped apertures are arranged between a radially inner region for fixing and a radially outer active region, all the apertures being arranged radially at the same level. For all radii, the apertures have substantially a constant length in the circumferential direction, independently of the size of the respective radius or circumference. A region which appears to be translucent when the blade is rotated rapidly on account of the apertures would therefore have a translucence which decreases continuously from the inside to the outside. DE 299 19 103 U1 discloses a blade cutting and/or grinding according to the preamble of claim 1.

It is the object of the invention to specify a blade for cutting and/or grinding which makes simple and effective work monitoring possible.

According to the invention, this object is achieved with the characterizing features of claim 1 for a blade which is mentioned at the outset. The position of the region of homogeneous translucence appears to be well defined in the case of a corresponding observation from the side of the rotating blade by an operator.

For example, the operator can estimate a penetration depth of the blade quickly and simply as a result. This is assisted by the effect that human perception identifies the edges of a shape of uniform brightness in a particularly satisfactory manner.
In the context of the invention, a blade for cutting and/or grinding is to be understood to mean every flat or disk-shaped, rotating tool, in particular cutting blades, for example with incorporated diamonds or other hard materials, saw blades, for example with saw teeth as active region, grinding blades with grinding edging on end faces and/or side faces of the active region, and the like. The closed apertures are often arranged outside an active region or radially further to the inside, in particular between the receiving region and the active region. In principle, however, the apertures can also extend into the active region.

The translucence for a given radius of a circumferential circle about a center of rotation is understood here to be the sum of the interrupted circumference, divided by the circumference. The translucence will in practice usually be far below 50%, just to ensure the mechanical stability of the blade.

In one optimized embodiment of the invention, the translucence in the homogeneous region has a range of fluctuation of less than 15%, preferably of less than 10%. This ensures satisfactory localization with regard to the perception by the operator.

In a generally advantageous way, the radial width DH of the homogeneous region is not less than a fifteenth, preferably not less than a tenth of a maximum radius of the blade. As an alternative or in addition, the width DH of the homogeneous region is not more than a quarter, preferably not more than a fifth of a maximum radius of the blade. Overall, this ensures sufficient mechanical stability of the blade, even with regard to natural frequencies which occur.

In one preferred embodiment of the invention, at least one edge region of non-homogeneous translucence adjoins the homogeneous region radially to the outside or radially to the inside. Here, the edge region particularly preferably extends over a radial width DR which is not more than a fifth, in particular not more than a tenth of the radial width DT of the translucent region. Overall, this ensures sufficient localization of the translucent region, a large multiplicity of shapes for the apertures being made possible, in particular, by the non-homogeneous edge regions.

According to the invention it is provided that, over the width DH of the homogeneous region, the aperture has a substantially constant opening angle on each circular arc over a center of rotation. As a result, a single, individual aperture already satisfies the criterion of homogeneous translucence.

As an alternative or in addition to this, it can also be provided, however, that the homogeneous translucent region is produced by the superimposition of the translucences of a plurality of, in particular overlapping, apertures which do not per se satisfy the criterion of homogeneous translucence.

In the interest of a simple construction, the closed aperture in the homogeneous region is formed from adjacent, radially infinite segments of a substantially constant opening angle. Here, the constant opening angle satisfies the criterion of homogeneous translucence. It is preferable but not necessary that the shaping takes place with the formation of a consistent or consistently differentiable border line of the aperture.

It is expedient that, according to the invention, the aperture has an arrow shape and/or hook shape with two limbs according to the invention. Here, a tip of the arrow shape or hook shape can preferably point in the circumferential direction. A particularly pleasing shape is achieved here if the tip of the arrow and/or hook is rounded.

In one embodiment which is preferred from design aspects and is mechanically stable, the homogeneous region is formed exclusively by a plurality of, preferably between two and thirteen, identical apertures.

Further advantages and features of the invention result from the exemplary embodiment which will be described in the following text and from the dependent claims.

In the following text, one preferred exemplary embodiment of the invention will be described and will be explained in greater detail using the appended drawings, in which:
- fig. 1: shows a plan view which is substantially to scale of a blade according to the invention,
- fig. 2: shows an enlargement of a detail of the blade from fig. 1, and
- fig. 3: shows an illustration of one preferred design principle of a blade according to the invention.

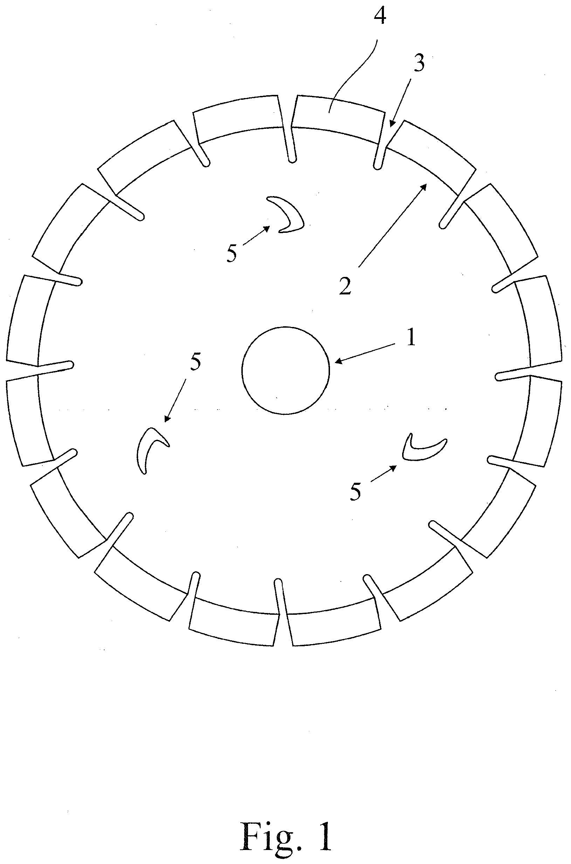

In the present case, the blade according to the invention which is shown in fig. 1 is configured as a cutting blade with a central receiving region 1, which comprises a hole, and a radially outer active region 2. The active region 2 has oblique slits 3 which are open to the outside and is fitted with diamond cutting elements 4.

The receiving region 1 serves for clamping the blade into a rotary drive, for example a hand-held power tool. Here, the hole of the receiving region 1, the center point of which corresponds to the center of rotation of the blade, is covered by a holder and cannot be seen during operation.

A plurality of, in the present case three, closed apertures 5 are arranged between the receiving region 1 and the active region 2. The apertures are at an identical angular spacing from one another. In the present case, the apertures 5 are congruent and are arranged in each case at the same radial spacing from the center of rotation. The orientation of the congruent apertures 5 with regard to a circumferential direction is in each case identical.

The apertures 5 have the shape of an arrow or hook with a rounded tip 5a and two limbs 5b, 5c which emanate therefrom. Here, the tip 5a points substantially in the rotational direction. The limbs 5b, 5c are shaped differently to one another, in this case and preferably.

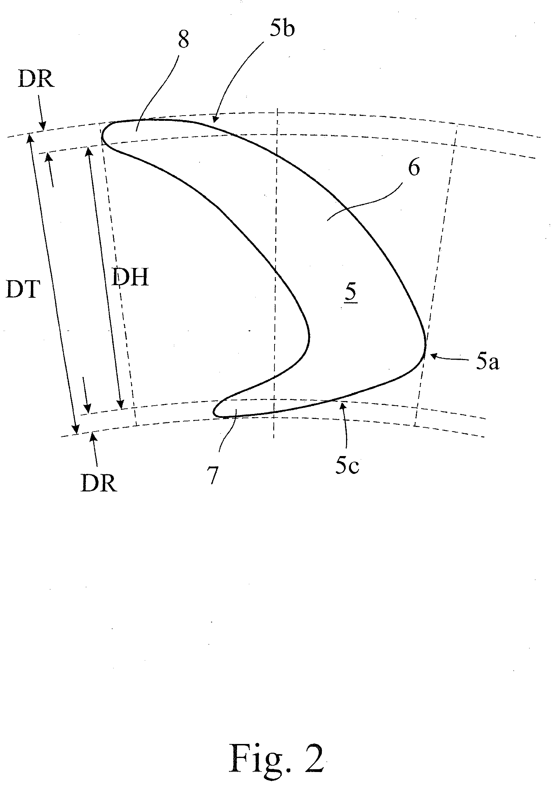

As fig. 2 shows in detail, the aperture 5 has a homogeneous region 6 which extends in the radial direction over a width DH, an overall width DT of the region which is translucent when rotated being somewhat greater than DH.

When the blade is rotated correspondingly rapidly, the apertures 5 bring about a region or circular ring which appears to be translucent and has the width DT, the translucence being uniform or homogeneous over the width DR. This is brought about by the fact that an accumulated opening angle of the apertures 5 is constant for a given radius within the homogeneous region. In the present case, the apertures are congruent, oriented identically and in the same radial position, with the result that the shape of the translucent region would be produced identically by a single one of the apertures. In the present example, the two further apertures 5 correspondingly bring about only an increase in the translucence, but not a change in the relative translucence distribution. In other embodiments which are not shown, it can be provided that the desired relative translucence distribution is produced only by the summation of the effects of a plurality of apertures.

Accordingly, in the present case, the apertures 5 in each case have a central region 6, over which their opening angle about the center of rotation is constant for every radius.

The central region 6 is adjoined in each case by an inner edge region 7 and an outer edge region 8 which have a non-constant opening angle and therefore, when rotated rapidly, bring about a respective edge region of non-homogeneous translucence. In the present case, the edge regions 7, 8 have the same radial width DR. Said edge regions are narrow in comparison with the homogeneous region 6. In the present case, it holds that DR is less than 8% of the width of the translucent region DT. In practice, edge regions 7, 8 of this type cannot be seen per se.

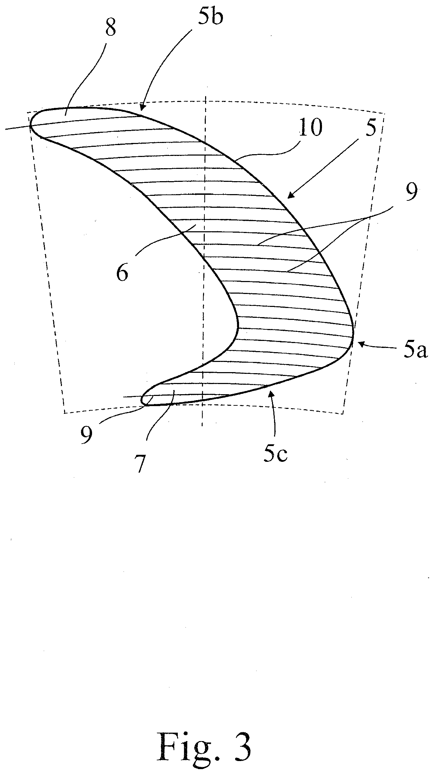

Fig. 3 clarifies the properties of the different regions 6, 7, 8 of the aperture 5. Here, in each case line segments 9 which represent the same opening angle are shown for a plurality of radii. A line segment which lies radially further to the outside therefore has a proportionally greater length than a line segment which lies further to the inside. In the homogeneous region 6 of the aperture 5, the ends of the line segments therefore form a border line 10 of the aperture 5. In the present case, the border line is consistently differentiable. In other embodiments, jumps or kinks in the border line are also conceivable.

Furthermore, in each case one line segment is shown in the non-homogeneous edge regions 7, 8 which are discernibly overlapped by the segment. The line segments 9 can be considered to be radially infinitely narrow circular ring segments of a constant opening angle, from which the aperture is built up.

A method for designing an aperture with a region of homogeneous translucence can therefore be carried out in such a way that first of all a desired part border line is defined, after which the opposite border line is obtained by applying the segments.

## Claims

1. A blade for cutting and/or grinding, comprising
a receiving region (1) which is arranged radially on the inside for releasably fixing the blade to a rotary drive, and
a radially outer active region (2) for interaction with a workpiece,
at least one closed aperture (5), in particular a plurality of closed apertures, being provided in the blade,
the blade having a region which has a radial width DT and appears to be translucent when rotated rapidly, by means of the aperture (5) or the plurality of apertures, the apertures (5) having an arrow shape and/or hook shape with two limbs (5b, 5c),
**characterized**
**in that**, over a predominant part of its width DT, the region which appears to be translucent has a region (6) of substantially homogeneous translucence,
**in that**, over the width DH of the homogeneous region, the aperture (5) has a substantially constant opening angle on each circular arc over a center of rotation.

2. The blade as claimed in claim 1, **characterized in that** a width DH of the homogeneous region (6) is not less than a fifteenth, in particular not less than a tenth of a maximum radius of the blade.

3. The blade as claimed in one of the preceding claims, **characterized in that** the width DH of the homogeneous region (6) is not more than a quarter, in particular not more than a fifth of a maximum radius of the blade.

4. The blade as claimed in one of the preceding claims, **characterized in that** at least one edge region (7, 8) of non-homogeneous translucence adjoins the homogeneous region (6) radially to the outside or radially to the inside.

5. The blade as claimed in claim 4, **characterized in that** the edge region (7, 8) extends over a radial width DR which is not more than a fifth, in particular not more than a tenth of the radial width DT of the translucent region.

6. The blade as claimed in one of the preceding claims, **characterized in that** the arrow shape and/or hook shape has a tip (5a) which points in the circumferential direction, preferably that the two limbs (5b, 5c) are shaped differently.

7. The blade as claimed in claim 6, **characterized in that** the tip (5a) of the arrow and/or hook is rounded.

8. The blade as claimed in one of the preceding claims, **characterized in that** the homogeneous region (6) is formed exclusively by a plurality of, in particular between two and thirteen, identical apertures (5).

## Patentansprüche

1. Scheibe zum Sägen und/oder Schleifen, umfassend
einen radial innen angeordneten Aufnahmebereich (1) zur lösbaren Befestigung der Scheibe an einem Drehantrieb, und
einen radial äußeren Wirkbereich (2) zum Zusammenwirken mit einem Werkstück,
wobei zumindest eine geschlossene Durchbrechung (5), insbesondere mehrere geschlossene Durchbrechungen, in der Scheibe vorgesehen ist bzw. sind,
wobei die Scheibe mittels der Durchbrechung (5) oder der mehreren Durchbrechungen bei schneller Drehung einen lichtdurchlässig erscheinenden Bereich mit einer radialen Breite DT aufweist, wobei die Durchbrechungen (5) eine Pfeilform und/oder eine Hakenform mit zwei Schenkeln (5b, 5c) aufweisen,
**dadurch gekennzeichnet,**
**dass** der lichtdurchlässig erscheinende Bereich über einen überwiegenden Teil seiner Breite DT einen Bereich (6) von im Wesentlichen homogener Durchlässigkeit aufweist,
**dass** die Durchbrechung (5) über die Breite DH des homogenen Bereichs einen im Wesentlichen konstanten Öffnungswinkel an jedem kreisförmigen Bogen über einer Drehachse aufweist.

2. Scheibe nach Anspruch 1, **dadurch gekennzeichnet, dass** eine Breite DH des homogenen Bereichs (6) nicht weniger als ein Fünfzehntel, insbesondere nicht weniger als ein Zehntel eines maximalen Radius der Scheibe beträgt.

3. Scheibe nach einem der vorhergehenden Ansprüche, **dadurch gekennzeichnet, dass** die Breite DH des homogenen Bereichs (6) nicht mehr als ein Viertel, insbesondere nicht mehr als ein Fünftel eines maximalen Radius der Scheibe beträgt.

4. Scheibe nach einem der vorhergehenden Ansprüche, **dadurch gekennzeichnet, dass** zumindest ein Randbereich (7, 8) von nicht homogener Durchlässigkeit radial nach außen oder radial nach innen an den homogenen Bereich (6) anschließt.

5. Scheibe nach Anspruch 4, **dadurch gekennzeichnet, dass** der Randbereich (7, 8) sich über eine radiale Breite DR erstreckt, die nicht mehr als ein Fünftel, insbesondere nicht mehr als ein Zehntel der radialen Breite DT des lichtdurchlässigen Bereichs beträgt.

6. Scheibe nach einem der vorhergehenden Ansprüche, **dadurch gekennzeichnet, dass** die Pfeilform und/oder Hakenform eine Spitze (5a) aufweist, die in die Umfangsrichtung weist, vorzugsweise, dass die beiden Schenkel (5b, 5c) unterschiedlich ausgeformt sind.

7. Scheibe nach Anspruch 6, **dadurch gekennzeichnet, dass** die Spitze (5a) des Pfeils und/oder Hakens verrundet ist.

8. Scheibe nach einem der vorhergehenden Ansprüche, **dadurch gekennzeichnet, dass** der homogene Bereich (6) ausschließlich durch eine Mehrzahl, insbesondere zwischen zwei und dreizehn, von gleichen Durchbrechungen (5) gebildet wird.

## Revendications

1. Lame de coupe et/ou d'abrasion, comprenant
une région de réception (1) qui est disposée radialement du côté intérieur et servant à fixer la lame, de manière libérable, à un mécanisme d'entraînement en rotation, et
une région active radialement extérieure (2) destinée à interagir avec une pièce,
au moins un orifice fermé (5), en particulier une pluralité d'orifices fermés, étant formés dans la lame,
la lame comportant une région qui présente une largeur radiale DT et paraît translucide lorsqu'elle est mise en rotation à grande vitesse, par le biais de l'orifice (5) ou la pluralité d'orifices, les orifices (5) présentant une forme de flèche et/ou une forme de crochet avec deux membres (5b, 5c),
**caractérisée**
**en ce que**, sur une majeure partie de sa largeur DT, la région qui paraît être translucide comporte une région (6) de translucidité essentiellement homogène,
**en ce que**, sur la largeur DH de la région homogène, l'orifice (5) présente un angle d'ouverture essentiellement constant sur chaque arc de cercle au-dessus d'un centre de rotation.

2. Lame selon la revendication 1, **caractérisée en ce qu'**une largeur DH de la région homogène (6) n'est pas inférieure à un quinzième, en particulier pas inférieure à un dixième d'un rayon maximal de la lame.

3. Lame selon l'une des revendications précédentes, **caractérisée en ce que** la largeur DH de la région homogène (6) n'est pas supérieure à un quart, en particulier pas supérieure à un cinquième d'un rayon maximal de la lame.

4. Lame selon l'une des revendications précédentes, **caractérisée en ce qu'**au moins une région de bord (7, 8) de translucidité non homogène jouxte la région homogène (6) radialement du côté extérieur ou radialement du côté intérieur.

5. Lame selon la revendication 4, **caractérisée en ce que** la région de bord (7, 8) s'étend sur une largeur radiale DR qui n'est pas supérieure à un cinquième, en particulier pas supérieure à un dixième de la largeur radiale DT de la région translucide.

6. Lame selon l'une des revendications précédentes, **caractérisée en ce que** la forme de flèche et/ou la forme de crochet comporte une pointe (5a) qui est orientée dans la direction circonférentielle, de préférence **en ce que** les deux membres (5b, 5c) présentent une forme différente.

7. Lame selon la revendication 6, **caractérisée en ce que** la pointe (5a) de la flèche et/ou du crochet est arrondie.

8. Lame selon l'une des revendications précédentes, **caractérisée en ce que** la région homogène (6) est formée exclusivement par une pluralité d'orifices identiques (5), en particulier entre deux et treize.
